# EUROPÄISCHE PATENTSCHRIFT

(11) **EP 1 869 098 B1**
(45) Veröffentlichungstag und Bekanntmachung des Hinweises auf die Patenterteilung: **01.04.2009**
(21) Anmeldenummer: 06725352.6
(22) Anmeldetag: 28.03.2006
(51) Int. Cl.: C08G 18/67, C08G 18/79, C09D 175/16, C08G 18/10

(54) **STRAHLUNGSHÄRTBARE VERBINDUNGEN**
RADIATION-HARDENABLE COMPOUNDS
COMPOSES RADIODURCISSABLES

(30) Priorität: 01.04.2005 DE 102005015309
(43) Veröffentlichungstag der Anmeldung: 26.12.2007
(73) Patentinhaber: BASF SE, 67056 Ludwigshafen (DE)
(72) Erfinder: SCHWALM, Reinhold, 67157 Wachenheim (DE); BECK, Erich, 68526 Ladenburg (DE); MENZEL, Klaus, 67069 Ludwigshafen (DE)
(86) Internationale Anmeldenummer: PCT/EP2006/061088
(87) Internationale Veröffentlichungsnummer: WO 2006/103228

(56) Entgegenhaltungen:
- EP-A- 0 315 020
- EP-A- 0 704 469
- EP-A- 0 903 363

## Beschreibung

Die Erfindung betrifft strahlungshärtbare Verbindungen, Verfahren zu deren Herstellung, deren Verwendung und diese enthaltende Beschichtungsmassen.

EP-A 902 040 beschreibt strahlungshärtbare Urethanacrylate auf Basis von aliphatischen lsocyanuraten und Biureten.

EP-A 903 363 beschreibt strahlungshärtbare Urethanacrylate auf Basis von lsocyanuraten oder Biureten, gegebenenfalls im Gemisch, und einem monomeren cycloaliphatischen Isocyanat. Als hydroxyfunktionelle Verbindungen werden lediglich allgemeine Listen von ethylenisch ungesättigten Verbindungen mit mindestens einer reaktiven OH-Gruppe und optional davon verschiedene OH-Gruppen enthaltende Verbindungen offenbart.

Nachteilig an den beiden letztgenannten Offenbarungen ist, daß die solche Polyurethanacrylate enthaltenden Beschichtungsmassen zwar harte und kratzfeste Beschichtungen bilden, jedoch spröde sind.

Die deutsche Patentanmeldung DE 10346327 A1 offenbart strahlungshärtbare Urethanacrylate auf Basis von lsocyanuraten oder Biureten, gegebenenfalls im Gemisch, und ethylenisch ungesättigte Hydroxyverbindungen in lediglich allgemeinen Listen, sowie Polytetrahydrofuran als Dihydroxyverbindungen.

Nachteilig an diesem Dokument ist, daß die solche Polyurethanacrylate enthaltenden Beschichtungsmassen zwar zu flexiblen Beschichtungen führen, denen es jedoch an Kratzfestigkeit mangelt.

Aufgabe der vorliegenden Erfindung war es, weitere strahlungshärtbare Verbindung zur Verfügung zu stellen, die durch elektromagnetische, bevorzugt UV-Strahlung und insbesondere UV-A Strahlung härtbar sein sollen. Dabei sollen die erhaltenen Beschichtungsmassen geringe Viskosität, hohe Härte und Kratzfestigkeiten bei gleichzeitig guter Flexibilität und eine hohe Reaktivität bei Bestrahlung aufweisen.

Die Aufgabe wurde gelöst durch Polyurethanacrylate (A), enthaltend als Aufbaukomponenten
(a) mindestens ein Polyisocyanat, das Isocyanuratgruppen enthält, auf Basis 1-Isocyanato-3,3,5- trimethyl-5-(isocyanatomethyl)cyclohexan (Isophorondiisocyanat),
(b) mindestens ein Polyisocyanat, das Isocyanuratgruppen enthält, auf Basis Hexamethylendiisocyanat (1,6-Diisocyanatohexan),
(c) mindestens ein aliphatisches und/oder cycloaliphatisches Diisocyanat,
(d1) mindestens ein Polyetherdiol oder Polyesterdiol mit einem Molgewicht zwischen 500 und 2000,
(d2) optional gegebenenfalls mindestens ein Diol mit einem Molekulargewicht von weniger als 220 g/mol,
(e) mindestens eine Verbindung mit mindestens einer gegenüber Isocyanat reaktiven Gruppe und mindestens einer radikalisch polymerisierbaren ungesättigten Gruppe sowie
(f) gegebenenfalls mindestens eine Verbindung mit genau einer gegenüber Isocyanat reaktiven Gruppe.

Die erfindungsgemäßen Polyurethanacrylate (A) weisen in der Regel ein zahlenmittleres Molgewicht Mₙ von weniger als 20000 g/mol, bevorzugt von weniger als 10000 g/mol, besonders bevorzugt von weniger als 5000 und ganz besonders bevorzugt von weniger als 3000 g/mol (bestimmt durch Gelpermeationschromatographie mit Tetrahydrofuran und Polystyrol als Standard).

Die untere Grenze für das Molgewicht Mₙ der erfindungsgemäßen Polyurethanacrylate ist zumeist 200 g/mol, bevorzugt 500 g/mol und besonders bevorzugt 1000 g/mol.

Die erfindungsgemäßen Polyurethanacrylate weisen praktisch keine freien Isocyanatgruppen mehr auf, d.h. der Gehalt an freien Isocyanatgruppen beträgt weniger als 1 Gew%, bevorzugt weniger als 0,5, besonders bevorzugt weniger als 0,3, ganz besonders bevorzugt weniger als 0,2, insbesondere weniger als 0,1 und speziell nicht mehr als 0,05 Gew%.

Bei der Aufbaukomponente (a) handelt es sich um mindestens ein Polyisocyanat, das Isocyanuratgruppen enthält, auf Basis 1-Isocyanato-3,3,5- trimethyl-5-(isocyanatomethyl)cyclohexan (Isophorondiisocyanat).

Derartige isocyanuratgruppenaufweisende Polyisocyanate können neben Isophorondiisocyanat weitere aromatische, aliphatische und/oder cycloaliphatische Diisocyanate enthalten. Besonders bevorzugt sind hierbei die entsprechenden, ausgehend von Isophorondiisocyanat mit aliphatischen und/oder anderen cycloaliphatischen Diisocyanaten gemischten Isocyanato-Isocyanurate und ganz besonders bevorzugt die Isocyanato-Isocyanurate auf Basis von Hexamethylendiisocyanat und Isophorondiisocyanat. Insbesondere handelt es sich bei den Verbindungen (a) um reine Polyisocyanate auf Basis Isophorondiisocyanat, also Tris-isocyanatocycloalkyl-Isocyanurate, welche cyclische Trimere von Isophorondiisocyanat darstellen, oder um Gemische mit ihren höheren, mehr als einen Isocyanuratring aufweisenden Homologen. Die IsocyanatoIsocyanurate haben im allgemeinen einen NCO-Gehalt von 10 bis 30 Gew.-%, insbesondere 15 bis 25 Gew.-% und eine mittlere NCO-Funktionalität von 3 bis 4,5.

Aromatische Isocyanate sind solche, die mindestens ein aromatisches Ringsystem enthalten.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclischen Verbindungen.

Neben den Isocyanuratgruppen können die Komponenten (a) weitere Gruppen enthalten, beispielsweise Uretdion-, Biuret-, Urethan- oder Allophanatgruppen oder Oxadiazintriongruppen.

Bevorzugt enthalten die Komponenten (a) jedoch im wesentlichen keine anderen Polyisocyanatgruppen als Isocyanuratgruppen, besonders bevorzugt weniger als 10 Gew%, ganz besonders bevorzugt weniger als 5 Gew%.

Der Anteil der Isocyanuratgruppen in den Komponenten (a), berechnet als C₃N₃O₃ mit einem Molgewicht von 126 g/mol, beträgt mindestens 5 Gew%, bevorzugt mindestens 10, besonders bevorzugt mindestens 15 Gew%.

Besonders geeignet sind für eine bevorzugte erfindungsgemäße Ausführungsform isocyanuratgruppenhaltige Verbindungen (a) auf Basis Isophorondiisocyanat mit einem NCO-Gehalt gemäß DIN EN ISO 11909 von 16,7 -17,6 %, und/oder einer mittleren NCO-Funktionalität von 3,0 bis 4,0, bevorzugt 3,0 bis 3,7, besonders bevorzugt 3,1 bis 3,5. Damit Beschichtungsmassen, basierend auf den erfindungsgemäßen Umsetzungsprodukten derartiger isocyanuratgruppenhaltiger Verbindungen später gut für Klarlacke geeignet sind, ist es weiter vorteilhaft, wenn die isocyanuratgruppenhaltigen Verbindungen eine Farbzahl gemäß HAZEN/APHA nach DIN EN 1557 von nicht mehr als 150 aufweisen.

In einer bevorzugten Ausführungsform weisen die Verbindungen (a) einen Gesamtchlorgehalt von weniger als 400 mg/kg auf, besonders bevorzugt einen Gesamtchlorgehalt von weniger als 80 mg/kg, ganz besonders bevorzugt weniger als 60, insbesondere weniger als 40, speziell weniger als 20 und sogar weniger als 10 mg/kg.

Komponente (b) ist mindestens ein Polyisocyanat, das Isocyanuratgruppen enthält, auf Basis Hexamethylendiisocyanat (1,6-Diisocyanatohexan).

Derartige isocyanuratgruppenaufweisende Polyisocyanate (b), die von den Verbindungen (a) verschieden sind, können neben Hexamethylendiisocyanat weitere aromatische, aliphatische und/oder cycloaliphatische Diisocyanate enthalten. Besonders bevorzugt sind hierbei die entsprechenden, ausgehend von Hexamethylendiisocyanat mit anderen aliphatischen und/oder cycloaliphatischen Diisocyanaten gemischten Isocyanato-Isocyanurate und ganz besonders bevorzugt die lsocyanato-Isocyanurate auf Basis von Hexamethylendiisocyanat und Isophorondiisocyanat. Insbesondere handelt es sich bei den Verbindungen (b) um reine Polyisocyanate auf Basis Hexamethylendiisocyanat, also Tris-isocyanatohexyl-Isocyanurate, welche cyclische Trimere von Hexamethylendiisocyanat darstellen, oder um Gemische mit ihren höheren, mehr als einen Isocyanuratring aufweisenden Homologen. Die lsocyanato-Isocyanurate haben im allgemeinen einen NCO-Gehalt von 10 bis 30 Gew.-%, insbesondere 15 bis 25 Gew.-% und eine mittlere NCO-Funktionalität von 3 bis 4,5.

Neben den Isocyanuratgruppen können die Komponenten (b) weitere Gruppen enthalten, beispielsweise Uretdion-, Biuret-, Urethan- oder Allophanatgruppen oder Oxadiazintriongruppen.

Bevorzugt enthalten die Komponenten (b) jedoch im wesentlichen keine anderen Polyisocyanatgruppen als Isocyanuratgruppen, besonders bevorzugt weniger als 10 Gew%, ganz besonders bevorzugt weniger als 5 Gew%.

Der Anteil der Isocyanuratgruppen in den Komponenten (b), berechnet als C₃N₃O₃ mit einem Molgewicht von 126 g/mol, beträgt mindestens 5 Gew%, bevorzugt mindestens 10, besonders bevorzugt mindestens 15, ganz besonders bevorzugt mindestens 20 und insbesondere mindestens 24 Gew%.

Besonders geeignet sind für diese erfindungsgemäße Ausführungsform isocyanuratgruppenhaltige Verbindungen auf Basis Hexamethylendiamin mit einem NCO-Gehalt gemäß DIN EN ISO 11909 von 21,5 - 22,5 %, einer lösungsmittelfrei bestimmten Viskosität bei 23 °C gemäß DIN EN ISO 3219/A.3 von 2500-4000 mPas und/oder einer mittleren NCO-Funktionalität von 3,0 bis 4,0, bevorzugt 3,0 bis 3,7, besonders bevorzugt 3,1 bis 3,5. Damit Beschichtungsmassen, basierend auf den erfindungsgemäßen Umsetzungsprodukten derartiger isocyanuratgruppenhaltiger Verbindungen später gut für Klarlacke geeignet sind, ist es weiter vorteilhaft, wenn die isocyanuratgruppenhaltigen Verbindungen eine Farbzahl gemäß HAZEN/APHA nach DIN EN 1557 von nicht mehr als 40 aufweisen.

In einer bevorzugten Ausführungsform weisen die Verbindungen (b) einen Gesamtchlorgehalt von weniger als 400 mg/kg auf.

Bei der Aufbaukomponente (c) handelt es sich um mindestens ein aliphatisches und/oder cycloaliphatisches Diisocyanat.

Beispiele dafür sind geradlinige oder verzweigte C₄-C₂₀-Alkylendiisocyanaten oder cycloaliphatische Diisocyanate mit insgesamt 6 bis 20 C-Atomen.

Der Gehalt an Isocyanatgruppen, berechnet als NCO = 42 g/mol, beträgt in der Regel von 5 bis 25 Gew%.

Bei den Polyisocyanaten handelt es sich bevorzugt um Polyisocyanate auf Basis eines oder mehrerer Diisocyanate mit 4 bis 20 C-Atomen. Beispiele für übliche Diisocyanate sind aliphatische Diisocyanate wie Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Tetramethylxylylendlisocyanat, Trimethylhexandiisocyanat oder Tetramethylhexandiisocyanat, für cycloaliphatische Diisocyanate 1,4-, 1,3- oder 1,2-Diisocyanatocyclohexan. 4,4'- oder 2,4'-Di(isocyanatocyclohexyl)methan, 1-Isocyanato-3,3,5- trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1 - methylcyclohexan.

Es können auch Gemische der genannten Diisocyanate vorliegen.

Bevorzugt sind Hexamethylendiisocyanat, 1,3-Bis(isocyanatomethyl)cyclohexan, 1-sophorondiisocyanat und Di(isocyanatocyclohexyl)methan, besonders bevorzugt sind Hexamethylendiisocyanat und Isophorondiisocyanat und ganz besonders bevorzugt ist Isophorondiisocyanat.

Komponente (d1) ist mindestens ein Polyetherdiol und/oder Polyesterdiol mit einem Molgewicht zwischen 500 und 2000.

Beispiele für Polyetherdiole sind Polyethylenglykol, Polypropylenglykol, Poly-1,3-propandiol und Poly-THF, bevorzugt Poly-THF.

Der Wassergehalt des eingesetzten Poly-THF sollte < 10000 ppm, bevorzugt, kleiner 5000 ppm, besonders bevorzugt < 1000 ppm und ganz besonders bevorzugt < 500 ppm sein.

Beispiele für Polyesterdiole sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:

Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1;2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Polyethylenglykol mit einer Molmasse zwischen 106 und 2000, Polypropylenglykol mit einem Molgewicht zwischen 134 und 2000, Poly-THF mit einem Molgewicht zwischen 162 und 2000, Poly-1,3-propandiol mit einem Molgewicht zwischen 134 und 400, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3-und 1,4-Cyclohexandimethanol, 1,2-, 1,3-oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder lsomalt, die gegebenenfalls wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12- diol. Weiterhin bevorzugt ist Neopentylglykol.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Die erfindungsgemäß einzusetzenden Polyesterdiole (d1) weisen im statistischen Mittel 2 Hydroxyfunktionen auf. Der Einsatz der oben genannten mehr als zweiwertigen Säuren oder Alkohole kann zur Herstellung von verzweigten Polyesterdiolen Sinn machen. Die OH-Zahl der Polyesterdiole (d1) reicht in der Regel von 60 bis 250 mg KOH/g.

Die Molmasse des Polyetherdiols und Polyesterdiols sind mindestens 500, bevorzugt mindestens 700, besonders bevorzugt mindestens 800 und ganz besonders bevorzugt mindestens 900 g/mol. Die Molmasse kann bis zu 2000 g/mol betragen, bevorzugt bis zu 1500, besonders bevorzugt bis zu 1200 und ganz besonders bevorzugt bis zu 1100.

Optional kann ein Diol (d2) mit einer Molmasse < 220 g/mol eingesetzt werden, beispielsweise Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, Bis-(4-hydroxycyclohexan)isopropyliden, Tetramethylcyclobutandiol, 1,2-, 1,3- oder 1,4-Cyclohexandiol, Cyclooctandiol, Norbomandiol, Pinandiol, Decalindiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Cyclohexandimethanol, 1,2-, 1,3-oder 1,4-Cyclohexandiol, bevorzugt Ethylenglykol, 1,2-Propylenglykol, 1,4-Butandiol, 1,6-Hexandiol, 1,4-Cyclohexandimethanol, 1,8-Octandiol, 1,9-Nonandiol, 1,10-Dekandiol oder 1,12-Dodekandiol.

Im folgenden werden die Verbindungen (d1) sowie die optionale Verbindung (d2) zusammen als Verbindung (d) zusammengefaßt.

Bei der Aufbaukomponente (e) handelt es sich um mindestens eine Verbindung mit mindestens einer gegenüber Isocyanat reaktiven Gruppe und mindestens einer radikalisch polymerisierbaren ungesättigten Gruppe.

Komponenten (e) können ein bis drei, bevorzugt ein bis zwei und besonders bevorzugt genau eine gegenüber Isocyanat reaktive Gruppe aufweisen.

Komponenten (e) können mindestens eine radikalisch polymerisierbare ungesättigte Gruppe, bevorzugt ein bis fünf, besonders bevorzugt ein bis vier und ganz besonders bevorzugt ein bis drei radikalisch polymerisierbare ungesättigte Gruppen aufweisen.

Bevorzugt weisen die Komponenten (e) ein Molgewicht unter 10000 g/mol auf, besonders bevorzugt unter 5000 g/mol, ganz besonders bevorzugt unter 4000 g/mol und insbesondere unter 3000 g/mol. Spezielle Verbindungen (e) weisen ein Molgewicht unter 1000 oder sogar unter 600 g/mol auf.

Gegenüber Isocyanat reaktive Gruppen können z.B. sein -OH, -SH, -NH₂ und -NHR¹, bevorzugt -OH, -NH₂ und -NHR¹, besonders bevorzugt -OH und -NH₂, und ganz bei sonders bevorzugt -OH, wobei R¹ Wasserstoff oder eine 1 bis 4 Kohlenstoffatome enthaltende Alkylgruppe, wie z.B. Methyl, Ethyl, n-Propyl, *iso*-Propyl, n-Butyl, *iso*-Butyl, *sek-*Butyl oder *tert*-Butyl, bedeutet.

Komponenten (e) können z.B. Monoester von α,β-ungesättigten Carbonsäuren, wie Acrylsäure, Methacrylsäure, Crotonsäure, Itaconsäure, Fumarsäure, Maleinsäure, Acrylamidoglykolsäure, Methacrylamidoglykolsäure oder Vinylether mit Di- oder Polyolen sein, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,2-, 1,3- oder 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, 2,2-Bis(4-hydroxycyclohexyl)propan, Glycerin, Trimethylolethan, Trimethylolpropan, Trimethylolbutan, Pentaerythrit, Ditrimethylolpropan, Erythrit, Sorbit. Weiterhin können auch Ester oder Amide der (Meth)acrylsäure mit Aminoalkoholen z. B. 2-Aminoethanol, 2-(Methylamino)ethanol, 3-Amino-1-propanol, 1-Amino-2-propanol oder 2-(2-Aminoethoxy)ethanol, 2-Mercaptoethanol oder Polyaminoalkane, wie Ethylendiamin oder Diethylentriamin, oder Vinylessigsäure verwendet werden.

Beispiele für Amide ethylenisch ungesättigter Carbonsäuren mit Aminoalkoholen sind Hydroxyalkyl(meth)acrylamide wie N-Hydroxymethylacrylamid, N-Hydroxymethylmethacrylamid, N-Hydroxyethylacrylamid, N-Hydroyxethylmethacrylamid, 5-Hydroxy-3-oxapentyl(meth)acrylamid, N-Hydroxyalkylcrotonamide wie N-Hydroxymethyl-crotonamid oder N-Hydroxyalkylmaleinimide wie N-Hydroxyethylmaleinimid.

Bevorzugt verwendet werden 2-Hydroxyethyl(meth)acrylat, 2- oder 3-Hydroxypropyl(meth)acrylat, 1,4-Butandiolmono(meth)acrylat, Neopentylglykolmono(meth)acrylat, 1,5-Pentandiolmono(meth)acrylat, 1,6-Hexandiolmono(meth)acrylat, Glycerinmono- und di(meth)acrylat, Trimethylolpropanmono- und di(meth)acrylat, Pentaerythritmono-, -di- und -tri(meth)acrylat sowie 4-Hydroxybutylvinylether, 2-Aminoethyl(meth)acrylat, 2-Aminopropyl(meth)acrylat, 3-Aminopropyl(meth)acrylat, 4-Aminobutyl(meth)acrylat, 6-Aminohexyl(meth)acrylat, 2-Thioethyl(meth)acrylat, 2-Aminoethyl(meth)acrylamid, 2-Aminopropyl(meth)acrylamid, 3-Aminopropyl(meth)acrylamid, 2-Hydroxyethyl(meth)acrylamid, 2-Hydroxypropyl(meth)acrylamid oder 3-Hydroxypropyl(meth)acrylamid. Besonders bevorzugt sind 2-Hydroxyethylacrylat, 2-Hydroxyethylmethacrylat, 2- oder 3-Hydroxypropylacrylat, 1,4-Butandiolmonoacrylat, 3-(Acryloyloxy)-2-hydroxypropyl(meth)acrylat sowie die Monoacrylate von Polyethylenglykol der Molmasse von 106 bis 238.

Es kann sich bei der Komponente (e) auch um technische Gemische der Acrylierung von Trimethylolpropan, Pentaerythrit, Ditrimethylolpropan oder Dipentaerythrit. Dabei handelt es sich zumeist um Gemische vollständig und unvollständig acrylierter Polyole, beispielsweise sind Verbindungen (e) technische Gemische der Acrylierung von Pentaerythrit, die zumeist eine OH-Zahl gemäß DIN 53240 von 99 bis 115 mg KOH/g aufweisen und überwiegend aus Pentaerythrittriacrylat und Pentaerythrittetraacrylat bestehen, sowie untergeordnete Mengen von Pentaerythritdiacrylat enthalten können. Dies hat den Vorteil, daß Pentaerythrittetraacrylat nicht in das erfindungsgemäße Polyurethan eingebaut wird, sondern gleichzeitig als Reaktivverdünner fungiert.

Bei der optionalen Komponente (f) handelt es sich um mindestens eine Verbindung mit genau einer gegenüber Isocyanat reaktiven Gruppe.

Dabei handelt es sich bevorzugt um Monoole, besonders bevorzugt um Alkanole und ganz besonders bevorzugt um Alkanole mit 1 bis 20, bevorzugt 1 bis 12, besonders bevorzugt 1 bis 6, ganz besonders bevorzugt 1 bis 4 und insbesondere 1 bis 2 Kohlenstoffatome.

Beispiele dafür sind Methanol, Ethanol, *iso*-Propanol, n-Propanol, n-Butanol, *iso*Butanol, *sek*-Butanol, *tert*-Butanol, n-Hexanol, n-Heptanol, n-Octanol, n-Decanol, n-Dodecanol (Laurylalkohol), 2-Ethylhexanol, Cyclopentanol, Cyclohexanol, Cyclooctanol, Cyclododecanol, Ethylenglykolmonomethylether, Ethylenglykolmonoethylether, Diethylenglykol, 1,3-Propandiolmonomethylether, bevorzugt sind Methanol, Ethanol, *iso*-Propanol, n-Propanol, n-Butanol, *tert*-Butanol, n-Hexanol, 2-Ethylhexanol, Cyclopentanol, Cyclohexanol, und Cyclododecanol, besonders bevorzugt sind Methanol, Ethanol, *iso*-Propanol, n-Propanol, n-Butanol und *tert*-Butanol, ganz besonders bevorzugt sind Methanol und Ethanol und insbesondere Methanol.

In einer bevorzugten Ausführungsform kann es sich bei den Monoolen um die genannten cycloaliphatischen Alkohole handeln, bevorzugt um Cyclopentanol oder Cyclohexanol, besonders bevorzugt um Cyclohexanol.

In einer weiteren bevorzugten Ausführungsform kann es sich bei den Monoolen um die genannten aliphatischen Alkohole mit 6 bis 20 Kohlenstoffatomen handeln, besonders bevorzugt um solche mit 8 bis 20 Kohlenstoffatomen, ganz besonders bevorzugt um solche mit 10 bis 20 Kohlenstoffatomen.

In einer besonders bevorzugten Ausführungsform handelt es sich bei den Monoolen um die genannten aliphatischen Alkohole handeln, ganz besonders bevorzugt um die mit 1 bis 4 Kohlenstoffatomen, insbesondere Methanol.

Die Komponenten (a), (b) und/oder (c), bevorzugt (a) und/oder (b) und besonders bevorzugt die Komponente (a) kann bevorzugt in einem Lösungsmittel oder Lösungsmittelgemisch eingesetzt werden, um die Viskosität zu verringern.

Beispiele für derartige Lösungsmittel sind aromatische und/oder (cyclo)aliphatische Kohlenwasserstoffe und deren Gemische, halogenierte Kohlenwasserstoffe, Ester und Ether.

Bevorzugt sind aromatische Kohlenwasserstoffe, (cyclo)aliphatische Kohlenwasserstoffe, Alkansäurealkylester, alkoxylierte Alkansäurealkylester und deren Gemische.

Besonders bevorzugt sind ein- oder mehrfach alkylierte Benzole und Naphthaline, Alkansäurealkylester und alkoxylierte Alkansäurealkylester sowie deren Gemische.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, O-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154-178 °C), 150 (Siedebereich etwa 182 - 207 °C) und 200 (CAS-Nr. 64742-94-5), sowie die Shellsol®-Marken der Firma Shell. Kohlenwasserstoffgemische aus Paraffinen, Cycloparaffinen und Aromaten sind auch unter den Bezeichnungen Kristallöl (beispielsweise Kristallöl 30, Siedebereich etwa 158 -198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155-180 °C, schwer: Siedebereich etwa 225 - 300 °C,) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

Der Gehalt an aliphatischen Kohlenwasserstoffen beträgt in der Regel weniger als 5, bevorzugt weniger als 2,5 und besonders bevorzugt weniger als 1 Gew%.

Halogenierte Kohlenwasserstoffe sind beispielsweise Chlorbenzol und Dichlorbenzol oder dessen Isomerengemische.

Ester sind beispielsweise n-Butylacetat, Ethylacetat, Propylpropionat, 1-Methoxypropylacetat-2 und 2-Methoxyethylacetat.

Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylenglykol.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Weiterhin bevorzugt sind n-Butylacetat, Ethylacetat, 1-Methoxypropylacetat-2, 2-Methoxyethylacetat und Propylpropionat, sowie deren Gemische, insbesondere mit den oben aufgeführten aromatischen Kohlenwasserstoffgemischen.

Derartige Gemische können im Volumenverhältnis 5:1 bis 1:5 erstellt werden, bevorzugt im Volumenverhältnis 4:1 bis 1:4, besonders bevorzugt im Volumenverhältnis 3:1 bis 1:3 und ganz besonders bevorzugt im Volumenverhältnis 2:1 bis 1:2.

Bevorzugte Beispiele sind Butylacetat/Xylol, Methoxypropylacetat/Xylol 1:1, Butylacetat/Solventnaphtha 100 1:1, Butylacetat/Solvesso® 100 1:2 und Kristallöl 30/Shellsol® A 3:1.

Der Gehalt der Polyisocyanate in den Lösungsmittelgemischen kann in der Regel bis zu 98 Gew%, bezogen auf die Summe aus Polyisocyanat und Lösungsmittel, betragen, bevorzugt bis 95 Gew%, besonders bevorzugt bis 90 Gew%, ganz besonders bevorzugt bis 86 Gew% und insbesondere bis zu 80 Gew%.

Der Gehalt der Polyisocyanate in den Lösungsmittelgemischen beträgt in der Regel 50 Gew% oder mehr, bezogen auf die Summe aus Polyisocyanat und Lösungsmittel, bevorzugt 60 Gew% oder mehr, besonders bevorzugt 63 Gew% oder mehr und ganz besonders bevorzugt 65 Gew% oder mehr.

So wird die Komponente (a) bevorzugt in n-Butylacetat, n-Butylacetat/Solvesso®100 1:2 oder Kristallöl 30/Shellsol® A 3:1 mit einem Isocyanuratgehalt von ca. 70 Gew% eingesetzt, besonders bevorzugt lösungsmittelfrei.

So wird die Komponente (b) bevorzugt ohne Lösungsmittel eingesetzt, oder gelöst in n-Butylacetat, n-Butylacetat/Solvent Naphtha®100 1:1, Solvent Naphtha®100 oder 1-Methoxypropylacetat-2 mit einem lsocyanuratgehalt von ca. 50 bis 90 Gew% eingesetzt.

Die erfindungsgemäß verwendbaren Polyurethane werden durch Reaktion der Komponenten (a), (b), (d1), (d2) und (e) sowie (c) und/oder (f) miteinander erhalten.

In einer weiteren bevorzugten Ausführungsform der erfindungsgemäßen Polyurethanacrylate, in denen mindestens eine Komponente (c) anwesend ist, beträgt das Verhältnis der Komponenten (a): (b) : (c) bevorzugt 10 bis 30 : 20 bis 40 : 20 bis 70 (bezogen auf mol reaktive Isocyanatgruppen).

Dabei ist die molare Zusammensetzung (d):(e):(f) pro 1 mol reaktive Isocycanatgruppen in (a), (b) und (c) zusammen in der Regel wie folgt:
(d) 5 - 50, bevorzugt 5-40 und besonders bevorzugt 10 - 30 mol% an gegenüber Isocyanat reaktive Gruppen,
(e) 50 -95, bevorzugt 60 - 90 und besonders bevorzugt 70 - 85 mol% an gegenüber Isocyanat reaktive Gruppen,
(f) 0 -10, bevorzugt 0 - 5 und besonders bevorzugt 0 - 3 mol% an gegenüber Isocyanat reaktiven Gruppen,
mit der Maßgabe, daß die Summe der gegenüber Isocyanat reaktiven Gruppen der Anzahl der Isocyanatgruppen in (a), (b) und (c) entspricht.

Das Verhältnis der Hydroxygruppen in den Verbindungen (d) setzt sich aus den Verbindungen (d1): (d2) zusammen wie folgt: (d1):(d2) = 50 -100 : 0 - 50, bevorzugt 60 -100 : 0 - 40, besonders bevorzugt 75 -100 : 0 - 25, ganz besonders bevorzugt 85 - 100 : 0 -15 und insbesondere 100 : 0.

Die Bildung des Addukts aus isocyanatgruppenhaltiger Verbindung und den Verbindungen, die gegenüber Isocyanatgruppen reaktive Gruppen enthält erfolgt in der Regel durch Mischen der Komponenten in beliebiger Reihenfolge, gegebenenfalls bei erhöhter Temperatur.

Bevorzugt wird dabei die Verbindung, die gegenüber Isocyanatgruppen reaktive Gruppen enthält, zu der isocyanatgruppenhaltigen Verbindung zugegeben, bevorzugt in mehreren Schritten.

In einer Ausführungsform der vorliegenden Erfindung kann zunächst zumindest ein Teil der Verbindung (a) und/oder (b) vorgelegt werden, daraufhin ein stöchiometrischer Überschuß der Verbindung (d) zugegeben werden, so daß ein hydroxygruppenhaltiges Polyurethan erhalten wird, und anschließend mit gegebenenfalls dem Rest der Verbindung (a) und/oder (b) sowie gegebenenfalls Verbindung (c) in der gewünschten Stöchiometrie umgesetzt werden, so daß ein isocyanatgruppenhaltiges Polyurethan entsteht, das dann in einem letzten Reaktionsschritt mit Verbindung (e) reagiert wird. Eventuell vorhandene Isocyanatgruppen können, falls erforderlich, abschließend noch durch Umsetzung mit Verbindung (f) abreagiert werden.

In einher weiteren Ausführungsform der vorliegenden Erfindung kann zunächst zumindest ein Teil der Verbindung (a) und/oder (b) vorgelegt werden, daraufhin ein stöchiometrischer Unterschuß zumindest eines Teils der Verbindung (d) zugegeben werden, so daß ein isocyanatgruppenhaltiges Polyurethan erhalten wird, und anschließend mit gegebenenfalls dem Rest der Verbindung (a) und/oder (b) und/oder (d) und (e), sowie gegebenenfalls Verbindung (c) in der gewünschten Stöchiometrie umgesetzt werden. Eventuell vorhandene Isocyanatgruppen können, falls erforderlich, abschließend noch durch Umsetzung mit Verbindung (f) abreagiert werden.

In einer weiteren Ausführungsform der vorliegenden Erfindung kann zunächst zumindest ein Teil der Verbindung (c) vorgelegt werden, daraufhin ein stöchiometrischer Unterschuß zumindest eines Teils der Verbindung (d) zugegeben werden, so daß ein isocyanatgruppenhaltiges Polyurethan erhalten wird, das anschließend mit den Verbindungen (e), (a) und (b), sowie gegebenenfalls dem Rest der Verbindung (c) und/oder (d) in der gewünschten Stöchiometrie umgesetzt wird. Eventuell vorhandene Isocyanatgruppen können, falls erforderlich, abschließend noch durch Umsetzung mit Verbindung (f) abreagiert werden.

In einer weiteren Ausführungsform der vorliegenden Erfindung kann zunächst zumindest ein Teil der Verbindung (c) vorgelegt werden, daraufhin ein stöchiometrischer Überschuß zumindest der Verbindung (d) zugegeben werden, so daß ein hydroxygruppenhaltiges Polyurethan erhalten wird, das anschließend mit den Verbindungen (a) und (b), sowie gegebenenfalls dem Rest der Verbindung (c) in der gewünschten Stöchiometrie zu einem isocyanatgruppenhaltigen Polyurethan umgesetzt wird. Abschließend wird mit Verbindung (e) sowie gegebenenfalls dem Rest der Verbindung (d) umgesetzt. Eventuell vorhandene Isocyanatgruppen können, falls erforderlich, abschließend noch durch Umsetzung mit Verbindung (f) abreagiert werden.

In der Regel wird die Reaktion bei Temperaturen zwischen 5 und 100°C. bevorzugt zwischen 20 bis 90 °C und besonders bevorzugt zwischen 40 und 80°C und insbesondere zwischen 60 und 80 °C durchgeführt.

Bevorzugt wird dabei unter wasserfreien Bedingungen gearbeitet.

Wasserfrei bedeutet dabei, daß der Wassergehalt im Reaktionssystem nicht mehr als 5 Gew% beträgt, bevorzugt nicht mehr als 3 Gew% und besonders bevorzugt nicht mehr als 1 Gew%, ganz besonders bevorzugt nicht mehr als 0,75 und insbesondere nicht mehr als 0,5 Gew%.

Bevorzugt wird die Reaktion in Gegenwart.mindestens eines sauerstoffhaltigen Gases durchgeführt, z.B. Luft oder Luft-Stickstoff-Gemische oder Gemische aus Sauerstoff oder einem sauerstoffhaltigen Gas mit einem unter den Reaktionsbedingungen inerten Gas, die einen Sauerstoffgehalt unter 15, bevorzugt unter 12, besonders bevorzugt unter 10, ganz besonders bevorzugt unter 8 und insbesondere unter 6 Vol% aufweisen.

Die Reaktion wird bevorzugt in Gegenwart mindestens eines Polymerisationsinhibitors durchgeführt.

Polymerisationsinhibitoren sind beispielsweise solche, wie sie beschrieben sind in der WO 03/35596, und dort insbesondere von Seite 5, Zeile 41 bis Seite 9, Zeile 7, deren Offenbarung hiermit ausdrücklich Bestandteil der vorliegenden Beschreibung sei.

Bevorzugte Polymerisationsinhibitoren sind Phenothiazin, Hydrochinonmonomethylether, 2-tert.-Butyl-4-methylphenol, 6-tert.-Butyl-2,4-dimethyl-phenol, 2,6-Di-tert.-Butyl-4-methylphenol, 4-Hydroxy-2,2,6,6-tetramethyl-piperidin-N-oxyl, 4-Oxo-2,2,6,6-tetramethyl-piperidin-N-oxyl, N,N'-Di-sec-butyl-p-phenylendiamin sowie Gemische davon.

Die Reaktion kann auch in Gegenwart eines inerten Solvens durchgeführt werden, z.B. einem der o.g. Lösungsmittel, bevorzugt Aceton, lso-butyl-methylketon, Toluol, Xylol, Butylacetat, Methoxypropylacetat oder Ethoxyethylacetat. Bevorzugt wird die Reaktion jedoch in Abwesenheit eines Solvens durchgeführt.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Zur Beschleunigung der Reaktion der Diisocyanate können die üblichen Katalysatoren mitverwendet werden. Dafür kommen prinzipiell alle in der Polyurethanchemie üblicherweise verwendeten Katalysatoren in Betracht.

Diese sind beispielsweise organische Amine, insbesondere tertiäre aliphatische, cycloaliphatische oder aromatische Amine, und/oder Lewis-saure organische Metallverbindungen. Als Lewis-saure organische Metallverbindungen kommen z.B. Zinnverbindungen in Frage, wie beispielsweise Zinn-(II)-salze von organischen Carbonsäuren, z.B. Zinn(II)-acetat, Zinn(II)-octoat, Zinn(II)-ethylhexoat und Zinn(II)-laurat und die Dialkylzinn(IV)-salze von organischen Carbonsäuren, z.B.Dimethylzinn-diacetat, Dibutylzinndiacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Auch Metallkomplexe wie Acetylacetonate des Eisens, Titans, Aluminiums, Zirkons, Mangans, Nickels und Cobalts sind möglich. Weitere Metallkatalysatoren werden von Blank et al. in Progress in Organic Coatings, 1999, Vol. 35, Seiten 19-29 beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Diocytzinndilaurat, Zirkon-Acetylacetonat und Zirkon-2,2,6,6-tetramethyl-3,5-heptandionat.

Auch Wismut-und Cobaltkatalysatoren sowie Cäsiumsalze können als Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻ , ClO4⁻ , Br⁻, J⁻, JO₃⁻, CN⁻, OCN⁻, NO2⁻, NO3⁻, HCO₃⁻, CO₃²⁻ , S²⁻, SH⁻, HSO3⁻, SO₃²⁻, HSO4⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Bevorzugt sind dabei Cäsiumcarboxylate, bei denen das Anion den Formeln (CₙH_{2N-1}O₂)⁻ sowie (Cₙ₊₁H₂₋ₙO₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Die erfindungsgemäßen Polyurethane (A) können in Beschichtungsmassen entweder allein oder im Gemisch mit anderen radikalisch polymerisierbaren Verbindungen eingesetzt werden.

Ein weiterer Gegenstand der vorliegenden Erfindung sind strahlungshärtbare Beschichtungsmassen, enthaltend
- mindestens ein erfindungsgemäßes Polyurethan (A),
- gegebenenfalls mindestens eine Verbindung (B) mit einer oder mehr als einer radikalisch polymerisierbaren Doppelbindung,
- gegebenenfalls mindestens einen Photoinitiator (P) und
- gegebenenfalls weitere lacktypische Additive.

Die erfindungsgemäßen Polyurethane (A) können als alleiniges Bindemittel oder in Kombination mit einem weiteren radikalisch polymerisierbaren Verbindung verwendet werden.

Verbindungen mit einer oder mehr als einer radikalisch polymerisierbaren Doppelbindung sind beispielsweise solche Verbindungen, die 1 bis 6, bevorzugt 1 bis 4 und besonders bevorzugt 1 bis 3 radikalisch polymerisationsfähige Gruppen aufweisen.

Radikalisch polymerisationsfähige Gruppen sind beispielsweise Vinylether- oder (Meth)Acrylat-Gruppen, bevorzugt (Meth)Acrylat-Gruppen und besonders bevorzugt Acrylat-Gruppen.

Radikalisch polymerisationsfähige Verbindungen werden häufig unterteilt in monofunktionelle (Verbindung mit einer radikalisch polymerisierbaren Doppelbindung) und multifunktionelle (Verbindung mit mehr als einer radikalisch polymerisierbaren Doppelbindung) polymerisationsfähige Verbindungen.

Monofunktionelle, polymerisationsfähige Verbindungen sind solche mit genau einer radikalisch polymerisationsfähigen Gruppe, multifunktionelle, polymerisationsfähige Verbindungen solche mit mehr als einer, bevorzugt mit mindestens zwei radikalisch polymerisationsfähigen Gruppen.

Monofunktionelle, polymerisationsfähige Verbindungen sind beispielsweise Ester der (Meth)acrylsäure mit Alkoholen, die 1 bis 20 C-Atome aufweisen, z.B. (Meth)acrylsäuremethylester, (Meth)acrylsäureethylester, (Meth)acrylsäurebutylester, (Meth)acrylsäure-2-ethylhexylester, 2-Hydroxyethyl(meth)acrylat, 2-Hydroxypropyl(meth)acrylat, 4-Hydroxybutyl(meth)acrylat, Dihydrodicyclopentadienylacrylat, Vinylaromatische Verbindungen, z.B. Styrol, Divinylbenzol, α,β-ungesättigte Nitrile, z.B. Acrylnitril, Methacrylnitril, α,β-ungesättigte Aldehyde, z.B: Acrolein, Methacrolein, Vinylester, z.B. Vinylacetat, Vinylpropionat, halogenierte ethylenisch ungesättigte Verbindungen, z.B. Vinylchlorid, Vinylidenchlorid, konjugierte ungesättigte Verbindungen, z.B. Butadien, Isopren, Chloropren, einfach ungesättigte Verbindungen, z.B. Ethylen, Propylen, 1-Buten, 2-Buten, iso-Buten, cyclische einfach ungesättigte Verbindungen, z.B. Cyclopenten, Cyclohexen, Cyclododecen, N-Vinylformamid, Allylessigsäure, Vinylessigsäure, monoethylenisch ungesättigten Carbonsäuren mit 3 bis 8 C-Atomen sowie deren wasserlöslichen Alkalimetall-, Erdalkalimetall- oder Ammoniumsalze wie beispielsweise: Acrylsäure, Methacrylsäure, Dimethylacryisäure, Ethacrylsäure, Maleinsäure, Citraconsäure, Methylenmalonsäure, Crotonsäure, Fumarsäure, Mesaconsäure und Itaconsäure, Maleinsäure, N-Vinylpyrrolidon, N-Vinyllactame, wie z.B. N-Vinylcaprolactam, N-Vinyl-N-Alkyl-carbonsäureamide oder N-Vinyl-carbonsäureamide, wie z. B. N-Vinylacetamid, N-Vinyl-N-methylformamid und N-Vinyl-N-methylacetamid oder Vinylether, z.B. Methylvinylether, Ethylvinylether, *n*-Propylvinylether, *iso-*Propylvinylether, n-Butylvinylether, *sek*-Butylvinylether, *iso*-Butylvinylether, *tert*-Butylvinylether, 4-Hydroxybutylvinylether, sowie Gemische davon.

Unter diesen bevorzugt sind die Ester der (Meth)Acrylsäure, besonders bevorzugt sind (Meth)acrylsäuremethylester, (Meth)acrylsäureethylester, (Meth)acrylsäure-n-butylester, (Meth)acrylsäure-2-ethylhexylester und 2-Hydroxyethylacrylat, ganz besonders bevorzugt sind (Meth)acrylsäure-n-butylester, (Meth)acrylsäure-2-ethylhexylester und 2-Hydroxyethylacrylat und insbesondere 2-Hydroxyethylacrylat.

(Meth)Acrylsäure steht in dieser Schrift für Methacrylsäure und Acrylsäure, bevorzugt für Acrylsäure.

In einer bevorzugten Ausführungsform der vorliegenden Erfindung sind solcheReaktivverdünner, wie sie in der deutschen Patentanmeldung DE 10346327 A1 offenbart und dort als Verbindungen b) bezeichnet sind, explizit als monofunktionelle, polymerisationsfähige Verbindungen ausgenommen. Bei derartigen Reaktiwerdünnern handelt es sich um monofunktionelle Ester α,β-ethylenisch ungesättigter Carbonsäuren mit einem monofunktionellen Alkanol, das wenigstens einen gesättigten 5- oder 6-gliedrigen Heterocyclus mit einem oder zwei Sauerstoffatomen im Ring als Strukturelement aufweist. Derartige Heterocyclen leiten sich beispielsweise vom Tetrahydrofuran, Tetrahydropyran, 1,3-Dioxolan, 1,3- oder 1,4-Dioxan ab. In einer besonders bevorzugten Ausführungsform der vorliegenden Erfindung sind solche Acrylate und Methacrylate als monofunktionelle, polymerisationsfähige Verbindungen ausgenommen, wie sie in der internationalen Patentanmeldung WO 2005/035460, S. 7, Z. 2 bis 17 aufgeführt sind.

Multifunktionelle, polymerisationsfähige Verbindungen sind bevorzugt multifunktionelle (Meth)acrylate, die mehr als 1, bevorzugt 2-10, besonders bevorzugt 2 - 6, ganz besonders bevorzugt 2 - 4 und insbesondere 2 - 3 (Meth)acrylatgruppen, bevorzugt Acrylatgruppen tragen.

Beispiele für multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,3-Butandioldiacrylat, 1,5-Pentandioldiacrylat, 1,6-Hexandioldiacrylät, 1,8-Octandioldiacrylat, Neopentylglykoldiacrylat, 1,1-, 1,2-, 1,3- und 1,4-Cyclohexandimethanoldiacrylat, 1,2-, 1,3- oder 1,4-Cyclohexandioldiacrylat, Trimethylolpropantriacrylat, Ditrimethylolpropanpenta- oder -hexaacrylat, Pentaerythrittri- oder tetraacrylat, Glycerindi- oder -triacrylat, sowie Di- und Polyacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit oder Isomalt, oder von Polyesterpolyolen, Polyetherolen, Poly-THF mit einer Molmasse zwischen 162 und 2000, Poly-1,3-Propandiol mit einer Molmasse zwischen 134 und 1178, Polyethylenglykol mit einer Molmasse zwischen 106 und 898, sowie Epoxy(meth)acrylate, Urethan(meth)acrylate oder Polycarbonat(meth)acrylate.

Weitere Beispiele sind (Meth)Acrylate von Verbindungen der Formel (VIIIa) bis (VIIIc), 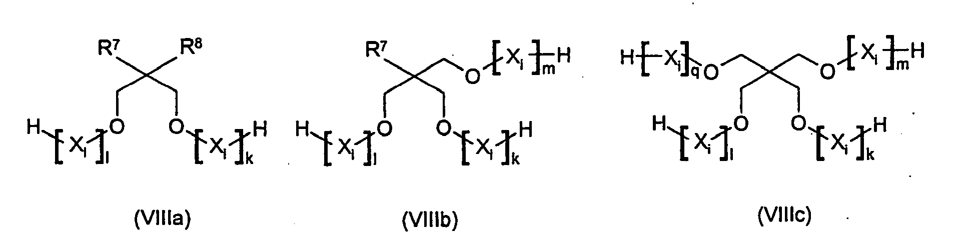 worin
- R⁷ und R⁸: unabhängig voneinander Wasserstoff oder gegebenenfalls durch Aryl, Alkyl, Aryloxy, Alkyloxy, Heteroatome und/oder Heterocyclen substituiertes C₁ - C₁₈-Alkyl,
- k, l, m, q: unabhängig voneinander je für eine ganze Zahl von 1 bis 10, bevorzugt 1 bis 5 und besonders bevorzugt 1 bis 3 steht und
jedes Xᵢ für i = 1 bis k, 1 bis I, 1 bis m und 1 bis q unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-,
worin Ph für Phenyl und Vin für Vinyl steht.

Darin bedeuten gegebenenfalls durch Aryl, Alkyl, Aryloxy, Alkyloxy, Heteroatome und/oder Heterocyclen substituiertes C₁ - C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Heptadecyl, Octadecyl, 1,1-Dimethylpropyl, 1,1-Dimethylbutyl, 1,1,3,3-Tetramethylbutyl, bevorzugt Methyl, Ethyl oder n-Propyl, ganz besonders bevorzugt Methyl oder Ethyl.

Bevorzugt handelt es sich dabei um (Meth)Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythrit.

Bevorzugte multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,6-Hexandioldiacrylat, Trimethylolpropantriacrylat, Pentaerythrittetraacrylat, Polyestepolyolenacrylate, Polyetherolacrylate und Triacrylat von ein- bis zwanzigfach alkoxyliertem, besonders bevorzugt ethoxyliertem Trimethylolpropan.

Ganz besonders bevorzugte multifunktionelle, polymerisationsfähige Verbindungen sind 1,4-Butandioldiacrylat, 1,6-Hexandioldiacrylat, Trimethylolpropantriacrylat, Pentaerythrittetraacrylat und Triacrylat von ein- bis zwanzigfach ethoxyliertem Trimethylolpropan.

Weitere Bestandteile können auch teilweise oder vollständig mit (Meth)Acrylsäure veresterte Polyalkohole sein.

Derartige Polyalkohole sind beispielsweise mindestens zweiwertige Polyole, Polyetherole oder Polyesterole oder Polyacrylatpolyole mit einer mittleren OH-Funktionalität von mindestens 2, bevorzugt mindestens 3, besonders bevorzugt mindestens 4 und ganz besonders bevorzugt 4 bis 20.

Polyetherole können zusätzlich zu den alkoxylierten Polyolen auch Polyethylenglykol mit einer Molmasse zwischen 106 und 2000, Polypropylenglykol mit einem Molgewicht zwischen 134 und 2000, Poly-THF mit einem Molgewicht zwischen 162 und 2000 oder Poly-1,3-propandiol mit einem Molgewicht zwischen 134 und 400 sein.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:

Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare. Derivate, wie Anhydride oder Dialkylester, beispielsweise C₁-C₄-Alkylester, bevorzugt Methyl-, Ethyl- oder n-Butylester, der genannten Säuren. Bevorzugt sind Dicarbonsäuren der allgemeinen Formel HOOC-(CH₂)_{y}-COOH. wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Polyethylenglykol mit einer Molmasse zwischen 106 und 2000, Polypropylenglykol mit einem Molgewicht zwischen 134 und 2000, Poly-THF mit einem Molgewicht zwischen 162 und 2000, Poly-1,3-propandiol mit einem Molgewicht zwischen 134 und 400, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die gegebenenfalls wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12- diol. Weiterhin bevorzugt ist Neopentylglykol.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)₂-COOH ableiten, wobei z eine Zahl von 1 bis 20 ist und ein H-Atom einer Methyleneinheit auch durch einen C₁- bis C₄-Alkylrest substituiert, sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Weiterhin kann es sich bei der multifunktionellen, polymerisationsfähigen Verbindung um Urethan(meth)acrylate, Epoxy(meth)acrylate oder Carbonat(meth)acrylate handeln.

Urethan(meth)acrylate sind z.B. erhältlich durch Umsetzung von Polyisocyanaten mit Hydroxyalkyl(meth)acrylaten oder -vinylethern und gegebenenfalls Kettenverlängerungsmitteln wie Diolen, Polyolen, Diaminen, Polyaminen oder Dithiolen oder Polythiolen. In Wasser ohne Zusatz von Emulgatoren dispergierbare Urethan(meth)acrylate enthalten zusätzlich noch ionische und/oder nichtionische hydrophile Gruppen, weich z.B. durch Aufbaukomponenten wie Hydroxycarbonsäuren, ins Urethan eingebracht werden.

Derartige Urethan(meth)acrylate sind von den erfindungsgemäßen Polyurethanacrylaten (A) verschieden und enthalten als Aufbaukomponenten im wesentlichen:
(1) mindestens ein organisches aliphatisches, aromatisches oder cycloaliphatisches Di- oder Polyisocyanat,
(2) mindestens eine Verbindung mit mindestens einer gegenüber Isocyanat reaktiven Gruppe und mindestens einer radikalisch polymerisierbaren ungesättigten Gruppe und
(3) gegebenenfalls mindestens eine Verbindung mit mindestens zwei gegenüber Isocyanat reaktiven Gruppen.

Die Urethan(meth)acrylate haben vorzugsweise ein zahlenmittleres Molgewicht Mₙ von 500 bis 20 000, insbesondere von 500 bis 10 000 besonders bevorzugt 600 bis 3000 g/mol (bestimmt durch Gelpermeationschromatographie mit Tetrahydrofuran und Polystyrol als Standard).

Die Urethan(meth)acrylate haben vorzugsweise einen Gehalt von 1 bis 5, besonders bevorzugt von 2 bis 4 Mol (Meth)acrylgruppen pro 1000 g Urethan(meth)acrylat.

Epoxid(meth)acrylate sind erhältlich durch Umsetzung von Epoxiden mit (Meth)acrylsäure. Als Epoxide in Betracht kommen z.B epoxidierte Olefine, aromatische Glycidylether oder aliphatische Glycidylether, bevorzugt solche von aromatischen oder aliphatischen Glycidylethern.

Epoxidierte Olefine können beispielsweise sein Ethylenoxid, Propylenoxid, *iso-*Butylenoxid, 1-Butenoxid, 2-Butenoxid, Vinyloxiran, Styroloxid oder Epichlorhydrin, bevorzugt sind Ethylenoxid, Propylenoxid, *iso*-Butylenoxid, Vinyloxiran, Styroloxid oder Epichlorhydrin, besonders bevorzugt Ethylenoxid, Propylenoxid oder Epichlorhydrin und ganz besonders bevorzugt Ethylenoxid und Epichlorhydrin.

Aromatische Glycidylether sind z.B. Bisphenol-A-diglycidylether, Bisphenol-F-diglycidylether, Bisphenol-B-diglycidylether, Bisphenol-S-diglycidylether, Hydrochinondiglycidylether, Alkylierungsprodukte von Phenol/Dicyclopentadien, z.B. 2,5-bis[(2,3-E-poxypropoxy)phenyl]octahydro-4,7-methano-5H-inden) (CAS-Nr. [13446-85-0]), Tris[4-(2,3-epoxypropoxy)phenyl]methan Isomere)CAS-Nr. [66072-39-7]), Phenol basierte Epoxy Novolake (CAS-Nr. [9003-35-4]) und Kresol basierte Epoxy Novolake (CAS-Nr. [37382-79-9]).

Aliphatische Glycidylether sind beispielsweise 1,4-Butandioldiglycidether, 1,6-Hexandioldiglycidylether, Trimethylolpropantriglycidylether, Pentaerythrittetraglycidylether, 1,1,2,2-tetrakis[4-(2,3-epoxypropoxy)phenyl]ethan (CAS-Nr. [27043-37-4]), Diglycidylether von Polypropylenglykol (α,ω-bis(2,3-epoxypropoxy)poly(oxypropylen) (CAS-Nr. [16096-30-3]) und von hydriertem Bisphenol A (2,2-bis[4-(2,3-epoxypropoxy)cyclohexyl]propan, CAS-Nr. [13410-58-7]).

Die Epoxid(meth)acrylate und -vinylether haben vorzugsweise ein zahlenmittleres Molgewicht Mₙ von 200 bis 20000, besonders bevorzugt von 200 bis 10000 g/mol und ganz besonders bevorzugt von 250 bis 3000 g/mol; der Gehalt an (Meth)acryl- oder Vinylethergruppen beträgt vorzugsweise 1 bis 5, besonders bevorzugt 2 bis 4 pro 1000 g Epoxid(meth)acrylat oder Vinyletherepoxid (bestimmt durch Gelpermeationschromatographie mit Polystyrol als Standard und Tetrahydrofuran als Elutionsmittel).

Carbonat(meth)acrylate enthalten im Mittel vorzugsweise 1 bis 5, insbesondere 2 bis 4, besonders bevorzugt 2 bis 3 (Meth)acrylgruppen und ganz besonders bevorzugt 2(Meth)acrylgruppen.

Das zahlenmittlere Molekulargewicht Mₙ der Carbonat(meth)acrylate ist vorzugsweise kleiner 3000 g/mol, besonders bevorzugt kleiner 1500 g/mol, besonders bevorzugt kleiner 800 g/mol (bestimmt durch Gelpermeationschromatgraphie mit Polystyrol als Standard, Lösemittel Tetrahydrofuran).

Die Carboriat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)acrylsäure oder auch Umesterung mit (Meth)acrylsäureestern, wie es z.B. in EP-A 92 269 beschrieben ist. Erhältlich sind sie auch durch Umsetzung von Phosgen, Harnstoffderivaten mit mehrwertigen, z.B. zweiwertigen Alkoholen.

In analoger Weise sind auch Vinylethercarbonate erhältlich, indem man einen Hydroxyalkylvinylether mit Kohlensäureestern sowie gegebenenfalls zweiwertigen Alkoholen umsetzt.

Denkbar sind auch (Meth)acrylate oder Vinylether von Polycarbonatpolyolen, wie das Reaktionsprodukt aus einem der genannten Di- oder Polyole und einem Kohlensäureester sowie einem hydroxylgruppenhaltigen (Meth)acrylat oder Vinylether.

Geeignete Kohlensäureester sind z.B. Ethylen-, 1,2- oder 1,3-Propylencarbonat, Kohlensäuredimethyl-, -diethyl- oder -dibutylester.

Geeignete hydroxygruppenhaltige (Meth)acrylate sind beispielsweise 2-Hydroxyethyl-(meth)acrylat, 2- oder 3-Hydroxypropyl(meth)acrylat, 1,4-Butandiolmoho(meth)acrylat, Neopentylglykolmono(meth)acrylat, Glycerinmono- und di(meth)acrylat, Trimethylolpropanmono- und di(meth)acrylat sowie Pentaerythritmono-, -di- und -tri(meth)acrylat.

Geeignete hydroxygruppenhaltige Vinylether sind z.B. 2-Hydroxyethylvinylether und 4-Hydroxybutylvinylether.

Besonders bevorzugte Carbonat(meth)acrylate sind solche der Formel: 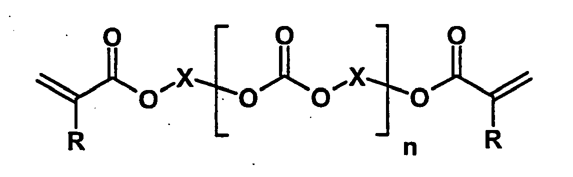 worin R für H oder CH₃, X für eine C₂-C₁₈ Alkylengruppe und n für eine ganze Zahl von 1 bis 5, vorzugsweise 1 bis 3 steht.

R steht vorzugsweise für H und X steht vorzugsweise für C₂- bis C₁₀-Alkylen, beispielsweise 1,2-Ethylen, 1,2-Propylen, 1,3-Propylen, 1,4-Butylen oder 1,6-Hexylen, besonders bevorzugt für C₄- bis C₈-Alkylen. Ganz besonders bevorzugt steht X für C₆-Alkylen.

Vorzugsweise handelt es sich bei den Carbonat(meth)acrylaten um aliphatische Carbonat(meth)acrylate.

Unter den multifunktionellen, polymerisationsfähigen Verbindung sind Urethan(meth)-acrylate besonders bevorzugt.

Für eine UV-Strahlungshärtung ist es erforderlich, den erfindungsgemäßen Beschichtungsmassen UV-Photoinitiator zuzusetzen. Bei einer Härtung durch Elektronenstrahlen kann auf die Zugabe von Photoinitiator verzichtet werden.

Photoinitiatoren können beispielsweise dem Fachmann bekannte Photoinitiatoren sein, z.B. solche in "Advances in Polymer Science", Volume 14, Springer Berlin 1974. oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht komme z.B. Mono- oder Bisacylphosphinoxide, wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin^{®} TPO der BASF AG), Ethyl-2,4,6-trimethylbenzoylphenylphosphinat (Lucirin^{®} TPO L der BASF AG), Bis-(2,4,6-trimethylbenzoyl)-phenylphosphinoxid (Irgacure® 819 der Firma Ciba Spezialitätenchemie), Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4-Methoxyacetophenon, β-Methylanthrachinon, *tert*-Butylanthrachinon, Anthrachinoncarbonysäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-*iso*-propylthioxanthon, 2,4-Dichlorthioxanthon, Benzoin, Benzoin-*iso*-butylether, Chloroxanthenon, Benzointetrahydropyranylether, Benzoin-methylether, Benzoin-ethylether, Benzoin-butylether, Benzoin-*iso-*propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Trio-Tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-*tert*-Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Bevorzugt unter diesen Photoinitiatoren sind 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, Benzophenon, 1-Benzoylcyclohexan-1-ol, 2-Hydroxy-2,2-dimethylacetophenon und 2,2-Dimethoxy-2-phenylacetophenon.

Als weitere lacktypische Additive können beispielsweise Antioxidantien, Stabilisatoren, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden.

Weiterhin können ein oder mehrere thermisch aktivierbare Initiatoren zugesetzt werden, z.B. Kaliumperoxodisulfat, Dibenzoylperoxid, Cyclohexanonperoxid, Di-tert.-Butylperoxid, Azobis-*iso-*butyronitril, Cyclohexylsulfonylacetylperoxid, Di-*iso*-propylpercarbonat, *tert-*Butylperoktoat oder Benzpinakol, sowie beispielsweise solche thermisch aktivierbare Initiatoren, die eine Halbwertszeit bei 80°C von mehr als 100 Stunden aufweisen, wie Di-t-Butylperoxid, Cumolhydroperoxid, Dicumylperoxid, t-Butylperbenzoat, silylierte Pinakole, die z. B. unter dem Handelsnamen ADDID 600 der Firma Wacker kommerziell erhältlich sind oder Hydroxylgruppen-haltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York beschrieben.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil^{®} der Fa. Degussa, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin^{®} -Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Die Beschichtung der Substrate mit den erfindungsgemäßen Beschichtungsmassen erfolgt nach üblichen, dem Fachmann bekannten Verfahren, wobei man eine erfindungsgemäße Beschichtungsmasse oder eine solche enthaltend Lackformulierung auf das zu beschichtende Substrat in der gewünschten Stärke aufbringt und gegebenenfalls trocknet. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen. Der Auftrag des Beschichtungsmittels kann auch elektrostatisch in Form von Pulver erfolgen (Pulverlacke). Die Beschichtungsstärke liegt in der Regel in einem Bereich von etwa 3 bis 1000 g/m² und vorzugsweise 10 bis 200 g/m².

Weiterhin wird ein Verfahren zum Beschichten von Substraten offenbart, bei dem man das eine erfindungsgemäßen Beschichtungsmasse oder eine solche enthaltende Lackformulierung, gegebenenfalls mit weiteren lacktypischen Additiven und thermisch, chemisch oder strahlungshärtbaren Harzen versetzt, auf das Substrat aufbringt und gegebenenfalls trocknet, mit Elektronenstrahlen oder UV-Belichtung unter sauerstoffhaltiger Atmosphäre oder bevorzugt unter Inertgas härtet.

Neben einer Strahlungshärtung können noch weitere Härtungsmechanismen involviert sein, beispielsweise thermische-, Feuchtigkeits-, chemische und/oder oxidative Härtung.

Die Beschichtungsmittel können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Spritzen, Spachteln, Rakeln, Bürsten, Rollen, Walzen, Gießen, Laminieren, Hinterspritzen oder Coextrudieren ein- oder mehrfach appliziert werden.

Die Beschichtungsstärke liegt in der Regel in einem Bereich von etwa 3 bis 1000 g/m² und vorzugsweise 10 bis 200 g/m².

Die Trocknung und Aushärtung der Beschichtungen erfolgt im allgemeinen unter normalen Temperaturbedingungen, d.h. ohne Erhitzung der Beschichtung. Die erfindungsgemäßen Mischungen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden. Dies ist begrenzt durch die Thermostabilität des Substrats.

Weiterhin wird ein Verfahren zum Beschichten von Substraten offenbart, bei dem man die erfindungsgemäße Beschichutngsmasse oder solche enthaltende Lackformulierungen, gegebenenfalls mit thermisch härtbaren Harzen versetzt, auf das Substrat aufbringt, trocknet, und anschließend mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur.

Das Verfahren zum Beschichten von Substraten kann auch so durchgeführt werden, daß nach dem Aufbringen der erfindungsgemäßen Beschichtungsmasse oder Lackformulierungen zunächst mit Elektronenstrahlen oder UV Belichtung unter Sauerstoff oder bevorzugt unter Inertgas bestrahlt wird, um eine Vorhärtung zu erzielen, anschließend bei Temperaturen bis zu 160°C, bevorzugt zwischen 60 und 160°C, thermisch behandelt und anschließend mit Elektronenstrahlen oder UV Belichtung unter Sauerstoff oder bevorzugt unter Inertgas endhärtet.

Gegebenenfalls kann, wenn mehrere Schichten des Beschichtungsmittels übereinander aufgetragen werden, nach jedem Beschichtungsvorgang eine Trocknung und/oder Strahlungshärtung erfolgen.

Die Strahlungshärtung erfolgt mit energiereichem Licht, z.B. UV-Licht oder Elektronenstrahlen. Die Strahlungshärtung kann bei höheren Temperaturen erfolgen. Bevorzugt ist dabei eine Temperatur oberhalb der T_{g} des strahlungshärtbaren Bindemittels.

Als Strahlungsquellen für die Strahlungshärtung geeignet sind z.B. Quecksilber-Niederdruckstrahler, -Mitteldruckstrahler mit Hochdruckstrahler.sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm strahlt, besonders bevorzugt von λ=200 bis 500 nm und ganz besonders bevorzugt λ=250 bis 400 nm, oder durch Bestrahlung mit energiereichen Elektronen (E-lektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Es stellt einen Vorteil der vorliegenden Erfindung dar, daß die erfindungsgemäßen Beschichtungsmassen eine hohe Reaktivität bei Bestrahlung mit UV A-Strahlung aufweisen, worunter im Rahmen dieser Schrift elektromagnetische Strahlung einer Wellenlänge von 400 bis 320 nm verstanden wird. Dies hat den Vorteil, daß Bestrahlung mit UV A-Strahlung geringeren arbeitsschutzrechtlichen Auflagen unterworfen ist als das Arbeiten mit kurzweiligerer Strahlung, da beispielsweise weniger Ozon erzeugt wird.

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Trocknung und/oder thermische Behandlung kann auch zusätzlich zur oder anstelle der thermischen Behandlung durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

Die erfindungsgemäßen Polyurethane können verwendet werden zur Beschichtung von verschiedenen Substraten, wie z. B. Holz, Holzfurnier, Papier, Pappe, Karton, Textil, Leder, Vlies, Kunststoffoberflächen, Glas, Keramik, mineralische Baustoffe, Metalle oder beschichtete Metalle.

Bei einer Verwendung in Beschichtungsmitteln können die erfindungsgemäßen Polyurethane insbesondere in Grundierungen, Füllern, pigmentierten Decklacken und insbesondere Klarlacken im Bereich Autoreparatur- oder Großfahrzeuglackierung, dort speziell als Reparaturlacke eingesetzt werden. Besonders geeignet sind solche Beschichtungsmittel für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur und Großfahrzeuglackierung.

Die erfindungsgemäßen Polyurethane und Beschichtungsmassen zeichnen sich durch eine hohe Härte und Kratzfestigkeit bei gleichzeitig hoher Elastizität aus.

In dieser Schrift verwendete ppm- und Prozentangaben beziehen sich, falls nicht anders angegeben, auf Gewichtsprozente, -ppm und Gewichtsteile.

Die folgenden Beispiele sollen die Erfindung erläutern, aber nicht auf diese Beispiele einschränken.

### Beispiele

### Beispiel 1

In einem Rührreaktor wurden 202 Teile Poly-THF mit einem mittleren Molekulargewicht von 1000 g/mol, 105 Teile Propyl propionat, 0,64 Teile 2,6 Di.tert. butyl- 4 Methyl phenol, 0,3 Teile Methyl-hydrochinon, 107 Teile Isophorondiisocyanat (IPDI), 107 Teile IPDI-Isocyanurat (Vestanat® 1890 der Firma Degussa AG) vorgelegt und bei Raumtemperatur gerührt, bis sich eine homogenen Mischung gebildet hatte. Dann gab man 0,13 Teile Di-butylzinn dilaurat dazu und rührte den Ansatz eine Stunde bei 70°C. Danach wurden 171 Teile Hydroxyethyl acrylat und 1,3 Teile Butandiol zugegeben. Nachdem die Temperatur wieder auf 70°C gefallen war, gab man 107 Teile Basonat® HI 100 (Isocyanurat von Hexamethylendiisocyanat, Firma BASF AG) und 105 Teile Propyl propionat zu und ließ weitere 4 Stunden bei 70°C reagieren. Nachdem der NCO Werte auf < 0,2 % gefallen war, gab man 5 Teile Methanol zu und ließ weitere 4 Stunden bei 70°C reagieren. Das Urethanacrylat hatte eine Viskosität gemessen im Kegel-Platte-Viskosimeter bei 23 °C von 2,6 Pas.

### Beispiel 2:

In einem Rührreaktor wurden 567 Teile Poly-THf mit einem mittleren Molekulargewicht von 1000 g/mol, 300 Teile Isophorondiisocyanat, 60 Teile Butylacetat, 300 Teile IPDI-Trimer (Vestanat® 1890 der Firm Degussa AG) mit 0,4 Teilen Dibutylzinndilaurat versetzt und 1 Stunde bei 70°C reagieren gelassen. Dann gab man 1,8 Teile 2,6 Di.tert. butyl- 4 methyl phenol, 0,9 Teile Methyl-hydrochinon, 480 Teile Hydroxyethyl acrylat und 300 Teile Basonat® HI 100 (Isocyanurat von Hexamethylendiisocyanat, Firm BASF AG) zu und ließ weitere 4 Stunden bei 70°C reagieren. Nachdem der NCO Werte auf < 0,6 % gefallen war, gab man 15 Teile Methanol zu und ließ weitere 4 Stunden bei 70°C reagieren. Das Urethanacrylat hatte eine Viskosität bei 23 °C von 350 Pas im Kegel-Platte-Viskosimeter.

### Beispiel 3:

In einem Rührreaktor wurden 567 Teile Polycaprolacton mit einem mittleren Molekulargewicht von 1000 g/mol, 300 Teile Isophorondiisocyanat, 330 Teile Butylacetat, 300 Teile IPDI-Trimer (Vestanat® 1890 der Firm Degussa AG) mit 0,4 Teilen Dibutylzinndilaurat versetzt und 1 Stunde bei 70°C reagieren gelassen. Dann gab man 1,8 Teile 2,6 Di.tert. butyl- 4 methyl phenol, 0,9 Teile Methyl-hydrochinon, 480 Teile Hydroxyethyl acrylat und 300 Teile Basonat® HI 100 (Isocyanurat von Hexamethylendiisocyanat, BASF AG) zu und ließ weitere 4 Stunden bei 70°C reagieren. Nachdem der NCO Werte auf < 0,4% gefallen war, gab man 15 Teile Methanol zu und ließ weitere 4 Stunden bei 70°C reagieren.

### Anwendungstechnische Prüfung der Beschichtungsmassen

97 Teile des nach Beispiel 2 erhaltenen Urethanacrylats wurden mit Butylacetat auf eine Viskosität von 1000 mPas verdünnt, mit 2,5 Teilen des Photoinitiators 1-Hydroxycyclohexyl-phenylketon und 0,5 Teilen Bis(2,4,6-trimethylbenzoyl)-phenylphosphinoxid versetzt und mit einem 200 µm Rakel auf Glasplatten sowie Bonderbleche aufgezogen, 30 Minuten bei Raumtemperatur und 30 Minuten bei 60°C getrocknet und anschließend 4 Minuten mit einer Panacol UV-A Lampe F-450 (eisendotiert, klares Filterglas) belichtet.

Die Schichten wiesen eine Erichsentiefung von 6,8 mm (DIN 53156, hohe Werte bedeuten hohe Flexibilität) und eine Pendelhärte von 66 s (DIN 53157, hohe Werte bedeuten hohe Härte) auf. Der Glanzverlust nach 10 Doppelhüben in einem Scotch Brite Test mit einem Auflagegewicht von 750 g betrug 16% (hohe Kratzfestigkeit).

### Vergleichsbeispiel 1:

In einem Rundkolben wurden 450 Teile Polytetrahydrofuran (Mₙ = 1000 g/mol), 105 Teile Hydroxyethylacrylat, 250 Teile Trimethylolpropanformal monoacrylat, 0,4 Teile Hydrochinonmonomethylether und 0,1 Teile Dibutylzinnlaurat vorgelegt und auf 80 °C aufgeheizt. Dann wurden 200 Teile Isophorondiisocyanat innerhalb einer halben Stunde zugetropft. Man ließ weitere 5 h reagieren, bis der Isocyanatgruppengehalt des Gemischs (NCO-Wert) auf 0 abgefallen war. Das erhaltene Harz wurde über eine 50 µm Filter filtriert und abgefüllt.

Eine Beschichtung die anstatt des Urethanacrylats aus Beispiel 2 ein Urethanacrylat gemäß Vergleichsbeispiel 1 enthielt, zeigte eine Erichsentiefung von > 9,5 mm, war aber noch klebrig (Pendeldämpfung 9 s).

### Vergleichsbeispiel 2:

Eine Beschichtung die anstatt des Urethanacrylats aus Beispiel 2 ein Urethanacrylat gemäß Beispiel 1 der EP 903363 enthielt, zeigte eine Erichsentiefung von 4 mm, eine Pendeldämpfung von 122 s sowie eine Glanzverlust von 93% (sehr geringe Kratzfestigkeit).

Im Scotch-Brite-Test wird als Prüfkörper ein 3 x 3 cm großer Siliciumcarbid modifizierter Faservlies (Scotch Brite SUFN, Firma 3M) an einem Zylinder befestigt. Dieser drückt das Faservlies mit 750 g an die Beschichtung und wird pneumatisch über die Beschichtung bewegt. Die Wegstrecke der Auslenkung beträgt 7 cm. Nach 10 Doppelhüben (DH) wird im mittleren Bereich der Beanspruchung der Glanz (Achtfachbestimmung) analog DIN 67530 bei einem Einfallwinkel von 20° gemessen. Der Restglanzwert in Prozent ergibt sich aus dem Verhältnis Glanz nach Belastung gegenüber Anfangsglanz. Hohe Restglanzwerte, also niedrige Werte für den Glanzverlust, bedeuten hohe Kratzfestigkeit

## Patentansprüche

1. Polyurethanacrylate (A), enthaltend als Aufbaukomponenten
(a) mindestens ein Polyisocyanat, das Isocyanuratgruppen enthält, auf Basis 1-Isocyanato-3,3,5- trimethyl-5-(isocyanatomethyl)cyclohexan (Isophorondiisocyanat),
(b) mindestens ein Polyisocyanat, das Isocyanuratgruppen enthält, auf Basis Hexamethylendiisocyanat (1,6-Diisocyanatohexan),
(c) mindestens ein aliphatisches und/oder cycloaliphatisches Diisocyanat,
(d1) mindestens ein Polyetherdiol oder Polyesterdiol mit einem Molgewicht zwischen 500 und 2000,
(d2) optional gegebenenfalls mindestens ein Diol mit einem Molekulargewicht von weniger als 220 g/mol,
e) mindestens eine Verbindung mit mindestens einer gegenüber Isocyanat reaktiven Gruppe und mindestens einer radikalisch polymerisierbaren ungesättigten Gruppe sowie
f) gegebenenfalls mindestens eine Verbindung mit genau einer gegenüber Isocyanat reaktiven Gruppe.

2. Polyurethanacrylat gemäß Anspruch 1, **dadurch gekennzeichnet, daß** es sich bei der Verbindung (a) um ein ausschließlich aus Isophorondiisocyanat aufgebautes, isocyanuratgruppenhaltiges Polyisocyanat handelt.

3. Polyurethanacrylat gemäß Anspruch 2, **dadurch gekennzeichnet, daß** es sich bei der Verbindung (a) um ein ausschließlich aus Isophorondiisocyanat aufgebautes, isocyanuratgruppenhaltiges Polyisocyanat mit einer Farbzahl gemäß HA-ZEN/APHA nach DIN EN 1557 von nicht mehr als 150 handelt.

4. Polyurethanacrylat gemäß einem der vorstehenden Ansprüche, **dadurch gekennzeichnet, daß** es sich bei der Verbindung (b) um ein ausschließlich aus Hexamethylendiisocyanat aufgebautes, isocyanuratgruppenhaltiges Polyisocyanat handelt.

5. Polyurethanacrylat gemäß Anspruch 4, **dadurch gekennzeichnet, daß** es sich bei der Verbindung (b) um ein ausschließlich aus Hexamethylendiisocyanat aufgebautes, isocyanuratgruppenhaltiges Polyisocyanat handelt, das einen NCO-Gehalt gemäß DIN EN ISO 11909 von 21,5 - 22,5 % und eine lösungsmittelfrei bestimmte Viskosität bei 23 °C gemäß DIN EN ISO 3219/A.3 von 2500-4000 mPas aufweist.

6. Polyurethanacrylat gemäß Anspruch 4 oder 5, **dadurch gekennzeichnet, daß** es sich bei der Verbindung (b) um ein ausschließlich aus Hexamethylendiisocyanat aufgebautes, isocyanuratgruppenhaltiges Polyisocyanat mit einer Farbzahl gemäß HAZEN/APHA nach DIN EN 1557 von nicht mehr als 40 handelt.

7. Polyurethanacrylat gemäß einem der vorstehenden Ansprüche, **dadurch gekennzeichnet, daß** es sich bei der Verbindung (c) um Hexamethylendiisocyanat oder Isophorondiisocyanat handelt.

8. Polyurethanacrylat gemäß einem der vorstehenden Ansprüche, **dadurch gekennzeichnet, daß** es sich bei der Verbindung (d1) um Polyethylenglykol, Polypropylenglykol, Poly-1,3-propandiol oder Poly-THF handelt.

9. Polyurethanacrylat gemäß einem der vorstehenden Ansprüche, **dadurch gekennzeichnet, daß** es sich bei der Verbindung (d2) um Ethylenglykol, 1,2-Propylenglykol, 1,4-Butandiol, 1,6-Hexandiol, 1,4-Cyclohexandimethanol, 1,8-Octandiol, 1,9-Nonandiol, 1,10-Dekandiol oder 1,12-Dodekandiol handelt.

10. Polyurethanacrylat gemäß einem der vorstehenden Ansprüche, **dadurch gekennzeichnet, daß** es sich bei der Verbindung (e) um 2-Hydroxyethyl(meth)acrylat, 2-oder 3-Hydroxypropyl(meth)acrylat, 1,4-Butandiolmono(meth)acrylat, Neopentylglykolmono(meth)acrylat, 1,5-Pentandiolmono(meth)acrylat, 1,6-Hexan-diolmono(meth)acrylat, Glycerinmono- und di(meth)acrylat, Trimethylolpropanmono- und di(meth)acrylat, Pentaerythritmono-, -di- und -tri(meth)acrylat, 4-Hydroxybutylvinylether, 2-Aminoethyl(meth)acrylat, 2-Aminopropyl(meth)acrylat, 3-Aminopropyl(meth)acrylat, 4-Aminobutyl(meth)acrylat, 6-Aminohexyl(meth)acrylat, 2-Thioethyl(meth)acrylat, 2-Aminoethyl(meth)acrylamid, 2-Amino-propyl(meth)acryl-amid, 3-Aminopropyl(meth)acrylamid, 2-Hydroxyethyl(meth)acrylamid, 2-Hydroxypropyl(meth)acrylamid oder 3-Hydroxypropyl(meth)acrylamid handelt.

11. Verfahren zur Herstellung von Polyurethanacrylaten gemäß einem der vorstehenden Ansprüche, **dadurch gekennzeichnet, daß** man zunächst zumindest einen Teil der Verbindung (a) und/oder (b) vorlegt, daraufhin ein stöchiometrischer Überschuß der Verbindung (d) zugibt, anschließend mit gegebenenfalls dem Rest der Verbindung (a) und/oder (b) sowie gegebenenfalls Verbindung (c) in der gewünschten Stöchiometrie umsetzt und dann mit Verbindung (e) umsetzt.

12. Verfahren zur Herstellung von Polyurethanacrylaten gemäß einem der vorstehenden Ansprüche, **dadurch gekennzeichnet, daß** man zumindest einen Teil der Verbindung (a) und/oder (b) vorlegt, daraufhin einen stöchiometrischen Unterschuß zumindest eines Teils der Verbindung (d) zugibt und anschließend mit gegebenenfalls dem Rest der Verbindung (a) und/oder (b) und/oder (d) und (e), sowie gegebenenfalls Verbindung (c) in der gewünschten Stöchiometrie umsetzt werden.

13. Verfahren zur Herstellung von Polyurethanacrylaten gemäß einem der vorstehenden Ansprüche, **dadurch gekennzeichnet, daß** man zumindest einen Teil der Verbindung (c) vorlegt, daraufhin einen stöchiometrischer Unterschuß zumindest eines Teils der Verbindung (d) zugibt, und anschließend mit den Verbindungen (e), (a) und (b), sowie gegebenenfalls dem Rest der Verbindung (c) und/oder (d) in der gewünschten Stöchiometrie umsetzt.

14. Strahlungshärtbare Beschichtungsmassen, enthaltend
- mindestens ein Polyurethanacrylat (A) gemäß einem der Ansprüche 1 bis 10,
- gegebenenfalls mindestens eine Verbindung (B) mit einer oder mehr als einer radikalisch polymerisierbaren Doppelbindung,
- gegebenenfalls mindestens einen Photoinitiator (P) und
- gegebenenfalls weitere lacktypische Additive.

15. Verwendung von Polyurethanacrylaten (A) gemäß einem der Ansprüche 1 bis 10 und Beschichtungsmassen gemäß Anspruch 14 zur Beschichtung von Holz, Holzfurnier, Papier, Pappe, Karton, Textil, Leder, Vlies, Kunststoffoberflächen, Glas, Keramik, mineralischen Baustoffen, Metallen oder beschichteten Metallen.

16. Verwendung von Polyurethanacrylaten (A) gemäß einem der Ansprüche 1 bis 10 und Beschichtungsmassen gemäß Anspruch 14 in Grundierungen, Füllern, pigmentierten Decklacken, Klarlacken, Klarlacken im Bereich Autoreparatur- oder Großfahrzeuglackierung oder als Reparaturlacke.

## Claims

1. A polyurethane acrylate (A) comprising as synthesis components
(a) at least one polyisocyanate which comprises isocyanurate groups, based on 1-isocyanato-3,3,5-trimethyl-5-(isocyanatomethyl)cyclohexane (isophorone diisocyanate),
(b) at least one polyisocyanate which comprises isocyanurate groups, based on hexamethylene diisocyanate (1,6-diisocyanatohexane),
(c) at least one aliphatic and/or cycloaliphatic Diisocyanate,
(d1) at least one polyetherdiol or polyesterdiol having a molar weight of from 500 to 2000,
(d2) optionally, if appropriate, at least one diol having a molecular weight of less than 220 g/mol,
e) at least one compound having at least one group reactive toward isocyanate and at least one unsaturated groups capable of free radical polymerization, and
f) if appropriate, at least one compound having exactly one group reactive toward isocyanate.

2. The polyurethane acrylate according to claim 1, wherein compound (a) is a polyisocyanate containing isocyanurate groups and synthesized exclusively from isophorone diisocyanate.

3. The Polyurethane acrylate according to claim 2, wherein compound (a) is a Polyisocyanate containing isocyanurate groups, synthesized exclusively from isophorone diisocyanate, and having a HAZEN/APHA color number to DIN EN 1557 of not more than 150.

4. The polyurethane acrylate according to any one of the preceding claims, wherein compound (b) is a polyisocyanate containing isocyanurate groups and synthesized exclusively from hexamethylene diisocyanate.

5. The polyurethane acrylate according to claim 4, wherein compound (b) is a polyisocyanate containing isocyanurate groups, synthesized exclusively from hexamethylene diisocyanate, and having an NCO content to DIN EN ISO 11909 of 21.5 - 22.5% and a viscosity determined in the absence of solvent at 23°C to DIN EN ISO 3219/A.3 of 2500-4000 mPas.

6. The polyurethane acrylate according to claim 4 or 5, wherein compound (b) is a polyisocyanate containing isocyanurate groups, synthesized exclusively from hexamethylene diisocyanate, and having a HAZEN/APHA color number to DIN EN 1557 of not more than 40.

7. The polyurethane acrylate according to any one of the preceding claims, wherein compound (c) is hexamethylene diisocyanate or isophorone diisocyanate.

8. The polyurethane acrylate according to any one of the preceding claims, wherein compound (d1) is polyethylene glycol, polypropylene glycol, poly-1,3-propanediol or poly THF.

9. The polyurethane acrylate according to any one of the preceding claims, wherein compound (d2) is ethylene glycol, 1,2-propylene glycol, 1,4-butanediol, 1,6-hexanediol, 1,4-cyclohexanedimethanol, 1,8-octanediol, 1,9-nonanediol, 1,10-decanediol or 1,12-dodecanediol.

10. The polyurethane acrylate according to any one of the preceding claims, wherein compound (e) is 2-hydroxyethyl (meth) acrylate, 2- or 3-hydroxypropyl (meth) acrylate, 1,4-butanediol mono(meth)acrylate, neopentylglycol mono (meth) acrylate, 1,5-pentanediol mono (meth) acrylate, 1,6-hexanediol mono (meth) acrylate, glyceryl mono- and di(meth)acrylate, trimethylolpropane mono- and di(meth) acrylate, pentaerythrityl mono-, di- and tri (meth) acrylate, 4-hydroxybutyl vinyl ether, 2-aminoethyl (meth) acrylate, 2-aminopropyl (meth) acrylate, 3-aminopropyl (meth) acrylate, 4-aminobutyl (meth)acrylate, 6-aminohexyl (meth)acrylate, 2-thioethyl (meth)acrylate, 2-aminoethyl(meth)acrylamide, 2-aminopropyl(meth)acrylamide, 3-aminopropyl-(meth) acrylamide, 2-hydroxyethyl(meth)acrylamide, 2-hydroxypropyl(meth)acrylamide or 3-hydroxypropyl(meth)acrylamide.

11. A process for preparing a polyurethane acrylate according to any one of the preceding claims, which comprises first initially taking at least a portion of compound (a) and/or (b), subsequently adding a stoichiometric excess of compound (d), thereafter redacting the mixture with, if appropriate, the remainder of compound (a) and/or (b) and also, if appropriate, compound (c) in the desired stoichiometry, and then carrying out redaction with compound (e).

12. A process for preparing a polyurethane acrylate according to any one of the preceding claims, which comprises initially taking at least a portion of compound (a) and/or (b), subsequently adding a substoichiometric amount of at least one portion of compound (d) and thereafter carrying out reaction with, if appropriate, the remainder of compound (a) and/or (b) and/or (d) and (e), and also, if appropriate, compound (c), in the desired stoichiometry.

13. A process for preparing a polyurethane acrylate according to any one of the preceding claims, which comprises initially taking at least a portion of compound (c), subsequently adding a substoichiometric amount of at least a portion of compound (d), and thereafter carrying out redaction with the compounds (e), (a) and (b), and also, if appropriate, the remainder of compound (c) and/or (d), in the desired stoichiometry.

14. A radiation-curable coating material comprising
- at least one polyurethane acrylate (A) according to any one of claims 1 to 10 ;
- if appropriate, at least one compound (B) having one or more than one double bond capable of free radical polymerization,
- if appropriate, at least one photoinitiator (P) and
- if appropriate, further additives typical of coatings.

15. The use of a polyurethane acrylate (A) according to any one of claims 1 to 10 or a coating material according to claim 14 for coating wood, wood veneer, paper, board, cardboard, textile, leather, nonwovens, plastics surfaces, glass, ceramic, mineral building materials, uncoated metals or coated metals.

16. The use of a polyurethane acrylate (A) according to any one of claims 1 to 10 or a coating material according to claim 14 in primers, surfacers, pigmented topcoat materials, clearcoat materials, clearcoat materials in the area of automotive refinish or the painting of large-size vehicles, or as a refinish material.

## Revendications

1. Poly(uréthane-acrylate) (A), contenant comme composants constitutifs
(a) au moins un polyisocyanate, qui contient des groupes isocyanurate, à base de 1-isocyanato-3,3,5-triméthyl-5-(isocyanatométhyl)cyclohexane (isophoronediisocyanate),
(b) au moins un polyisocyanate, qui contient des groupes isocyanurate, à base d'hexaméthylènediisocyanate (1,6-diisocyanatohexane),
(c) au moins un diisocyanate aliphatique et/ou cycloaliphatique,
(d1) au moins un polyétherdiol ou polyesterdiol présentant un poids molaire entre 500 et 2000,
(d2) éventuellement, le cas échéant, au moins un diol présentant un poids moléculaire inférieur à 220 g/mole,
(e) au moins un composé présentant au moins un groupe réactif par rapport à isocyanate et au moins un groupe insaturé polymérisable par voie radicalaire ainsi que
(f) le cas échéant au moins un composé présentant exactement un groupe réactif par rapport à isocyanate.

2. Poly(uréthane-acrylate) selon la revendication 1, **caractérisé en ce qu'**il s'agit, pour le composé (a), d'un polyisocyanate contenant des groupes isocyanurate, exclusivement formé à partir d'isophoronediisocyanate.

3. Poly(uréthane-acrylate) selon la revendication 2, **caractérisé en ce qu'**il s'agit, pour le composé (a), d'un polyisocyanate contenant des groupes isocyanurate, exclusivement formé à partir d'isophoronediisocyanate, présentant un indice de couleur selon HAZEN/APHA selon la norme DIN EN 1557 qui n'est pas supérieur à 150.

4. Poly(uréthane-acrylate) selon l'une quelconque des revendications précédentes, **caractérisé en ce qu'**il s'agit, pour le composé (b), d'un polyisocyanate contenant des groupes isocyanurate, exclusivement formé à partir d'hexaméthylènediisocyanate.

5. Poly(uréthane-acrylate) selon la revendication 4, **caractérisé en ce qu'**il s'agit, pour le composé (b), d'un polyisocyanate contenant des groupes isocyanurate, exclusivement formé à partir d'hexaméthylènediisocyanate, présentant une teneur en NCO selon la norme DIN EN ISO 11909 de 21,5-22,5 % et une viscosité déterminée sans solvant à 23 °C selon la norme DIN EN ISO 3219/A.3 de 2500-4000 mPa.s.

6. Poly(uréthane-acrylate) selon la revendication 4 ou 5, **caractérisé en ce qu'**il s'agit, pour le composé (b), d'un polyisocyanate contenant des groupes isocyanurate, exclusivement formé à partir d'hexaméthylènediisocyanate, présentant un indice de couleur selon HAZEN/APHA selon la norme DIN EN 1557 qui n'est pas supérieur à 40.

7. Poly(uréthane-acrylate) selon l'une quelconque des revendications précédentes, **caractérisé en ce qu'**il s'agit, pour le composé (c), d'hexaméthylènediisocyanate ou d'isophoronediisocyanate.

8. Poly(urèthane-acrylate) selon l'une quelconque des revendications précédentes, **caractérisé en ce qu'**il s'agit, pour le composé (d1), de polyéthyléneglycol, de polypropylèneglycol, de poly-1,3-propanediol ou de poly-THF.

9. Poly(uréthane-acrylate) selon l'une quelconque des revendications précédentes, **caractérisé en ce qu'**il s'agit, pour le composé (d2), d'éthyleneglycol, de 1,2-propylèneglycol, de 1,4-butanediol, de 1,6-hexanediol, de 1,4-cyclohexanediméthanol, de 1,8-octanediol, de 1,9-nonanediol, de 1,10-décanediol ou de 1,12-dodécanediol.

10. Poly(uréthane-acrylate) selon l'une quelconque des revendications précédentes, **caractérisé en ce qu'**il s'agit, pour le composé (e), de (méth)acrylate de 2-hydroxyéthyle, de (méth)acrylate de 2-hydroxypropyle ou de (méth)acrylate de 3-hydroxypropyle, de mono(méth)acrylate de 1,4-butanediol, de mono(méth)acrylate de néopentylgiycol, de mono (méth) acrylate de 1,5-pentanediol, de mono(méth)acrylate de 1,6-hexanediol, de mono(méth)acrylate et de di(méth)acrylate de glycérol, de mono(méth)acrylate et de di(méth)acrylate de triméthylolpropane, de mono(méth)acrylate, de di(méth)acrylate et de tri (méth) acrylate de pentaérythritol, de 4-hydroxybutylvinyléther, de (méth)acrylate de 2-aminoéthyle, de (méth)acrylate de 2-aminopropyle, de (méth)acrylate de 3-aminopropyle, de (méth)acrylate de 4-aminobutyle, de (méth)acrylate de 6-aminohexyle, de (méth)acrylate de 2-thioéthyle, de 2-aminoéthyl(méth)acrylamide, de 2-aminopropyl(méth)acrylamide, de 3-aminopropyl(méth)acrylamide, de 2-hydroxyéthyl (méth) acrylamide, de 2-hydroxypropyl(méth)acrylamide ou de 3-hydroxypropyl(méth)acrylamide.

11. Procédé pour la préparation de poly(uréthane-acrylates) selon l'une quelconque des revendications précédentes, **caractérisé en ce qu'**on dispose au préalable, d'abord, au moins une partie du composé (a) et/ou (b), puis on y ajoute un excès stoechiométrique du composé (d), on transforme ensuite le cas échéant avec le reste du composé (a) et/ou (b) ainsi que le cas échéant avec le composé (c) dans la stoechiométrie souhaitée, puis on transforme avec le composé (e).

12. Procédé pour la réparation de poly(uréthane-acrylates) selon l'une quelconque des revendications précédentes, **caractérisé en ce qu'**on dispose au préalable au moins une partie du composé (a) et/ou (b), puis on y ajoute une quantité inférieure à la quantité stoechiométrique d'au moins une partie du composé (d) et on transforme ensuite le cas échéant avec le reste du composé (a) et/ou (b) et/ou (d) est (e), ainsi que le cas échéant avec le composé (c) dans la stoechiométrie souhaitée.

13. Procédé pour la préparation de poly(uréthane-acrylates) selon l'une quelconque des revendications précédentes, **caractérisé en ce qu'**on dispose au préalable au moins une partie du composé (c), puis on y ajoute une quantité inférieure à la quantité stoechiométrique d'au moins une partie du composé (d) et on transforme ensuite avec les composés (e), (a) et/ou (b), ainsi que le cas échéant avec le reste du composé (c) et/ou (d) dans la stoechiométrie souhaitée.

14. Masses de revêtement durcissant sous l'effet d'un rayonnement, contenant
- au moins un poly(uréthane-acrylate) (A) selon l'une quelconque des revendications 1 à 10,
- le cas échéant au moins un composé (B) présentant une ou plusieurs doubles liaisons polymérisables par voie radicalaire,
- le cas échéant au moins un photo-initiateur (P) et
- le cas échéant d'autres additifs caractéristiques des laques.

15. Utilisation de poly(uréthane-acrylates) (A) selon l'une quelconque des revendications 1 à 10 et de masses de revêtement selon la revendication 14 pour le revêtement de bois, de placages en bois, de papier, de carton, de carton ondulé, de textile, de cuir, de non-tissé, de surfaces en matériau synthétique, de verre, de céramique, de matériaux de construction minéraux, de métaux ou de métaux revêtus.

16. Utilisation de poly(uréthane-acrylates) (A) selon l'une quelconque des revendications 1 à 10 et de masses de revêtement selon la revendication 14 dans les apprêts, les charges, les laques de recouvrement pigmentées, les laques claires, les laques claires dans le domaine du laquage de réparation de voitures ou de véhicules de grande taille ou comme laque de réparation.
